# EUROPEAN PATENT APPLICATION

(11) **EP 1 775 005 A1**
(43) Date of publication of application: **18.04.2007**
(21) Application number: 06124820.9
(22) Date of filing: 18.12.2003
(51) Int. Cl.: B01D 35/153, B01D 35/16

(54) **Fluid filter, drain mechanism thereof and draining method of fluid filter**

(30) Priority: 20.12.2002 JP 2002370445; 07.01.2003 JP 2003001419
(62) Divisional of application: 03029173.6
(71) Applicant: Toyoda Boshoku Corporation, Kariya-shi Aichi-ken 448-8651 (JP); Toyota Jidosha Kabushihi Kaisha, Aichi-ken Toyota-shi 471-8571 (JP); DENSO CORPORATION, Kariya-shi, Aichi-ken, 448-8661 (JP)
(72) Inventor: Kiichiro SUZUMORI, Kariya-shi, Aichi 448-8651 (JP); Toshihiro TAKAHARA, Kariya-shi, Aichi 448-8651 (JP); Sadahito FUKUMORI, Kariya-shi, Aichi 448-8651 (JP); Ryuichiro KAMIOKA, Toyota-shi, Aichi 471-8571 (JP); Jin HASHIOKA, Toyota-shi, Aichi 471-8571 (JP); Kenzo KADO, Toyota-shi, Aichi 471-8571 (JP)
(74) Representative: TBK-Patent

(57) **Abstract**

A drain mechanism (107) is provided with a cap (103), and a drain member (120) engaged with the cap from an outer side thereof, the drain member has a small-diameter outer peripheral portion (120a) which is provided with a seal member (123), a large-diameter outer peripheral portion (120b) which is provided with a male screw (121), a hollow portion (125) which is arranged along an axial direction, and a communication passage (126) which is connected to the hollow portion and is open to an outer peripheral side, and a drain portion (116) has a small-diameter inner peripheral portion (116a) which is provided with a seal surface (118), and a large-diameter inner peripheral portion (116b) which is provided with a female screw (117). In this structure, when the drain member is loosened in a direction of cancelling the screw fastening, the pressure contact state between the seal member and the seal surface is cancelled.

## Description

### BACKGROUND OF THE INVENTION

### FIELD OF THE INVENTION

The present invention relates to a fluid filter, a drain mechanism thereof and a draining method of the fluid filter. The present invention more particularly relates to a fluid filter, a drain mechanism thereof and a draining method of the fluid filter, having a simple and inexpensive structure which can prevent a heated fluid from splashing on a worker at a time of discharging the fluid such as a time of replacing an element.

The present invention can be widely used, for example, in an oil filter for filtering foreign materials, abraded powders, carbon and the like mixed in an oil lubricating an internal combustion engine, a fuel filter and a field relevant thereto.

In conventional, as a fluid filter, there has been generally known, for example, an element replacement type fluid filter in which a filter element is replaced at a time when a filter media is clogged after a predetermined time has passed and reaches a service life.

As a drain mechanism of the element replacement type fluid filter, there has been known, for example, a structure in which a drain member (a drain plug 15) is screwed with a drain hole formed in a cap (a lower case 12) (refer to a patent document 1). Accordingly, it is possible to detach the drain member from the drain hole by loosening the drain member so as to leave open the drain hole prior to separating the case and the cap by canceling the engagement between both the elements at a time of replacing a filter element, thereby discharging a residual oil in an inner portion of the housing from the drain hole.

In this case, in the fluid filter for filtering an engine oil for a vehicle, an engine is frequently warmed up at a time of replacing the filter element, and the oil is in a heated state.

However, in the conventional drain mechanism, discharging the residual oil at a time of replacing the filter element is performed by detaching the drain member from the cap. In other words, in the middle of loosening a screw cramp of the drain member, a sealing of a seal member (a packing 15a) for the drain member is cancelled, and at the same time, discharging the residual oil is started. As a result, there is generated a disadvantage that the heated residual oil overflows during a detaching operation of the drain member, and splashes on hands of the worker.

Consequently, as the conventional drain mechanism of the fluid filter for solving the problem mentioned above, there has been known, for example, a structure in which a tubular drain member (a drain plug 15) having a hollow portion (a center hole 15g) is screwed with a drain hole formed in a cap (a lower case 12) (refer to a patent document 2).

Describing in detail, the drain member has a small-diameter outer peripheral portion (a small-diameter portion 15a) in a leading end side in which a male screw screwed with a female screw in the cap is formed, and a large-diameter outer peripheral portion (a middle-diameter portion 15b) which is connected to the small-diameter outer peripheral portion in an axial direction and to which a pair of upper and lower seal members (packing 15g) pressure contacted to a seal surface of the cap. Further, a communication passage (a window hole 15f) which is open to an outer peripheral side between the male screw and the upper seal member and is connected to the hollow portion is formed in the drain member.

The communication passage of the drain member and the inner portion of the housing are sealed by a pair of seal members, at a time of normally using the fluid filter. Further, when replacing the filter element and the like, the sealing of the upper seal member is cancelled by loosening the drain member, the communication passage and the inner portion of the housing are communicated with each other, and the residual oil within the housing is discharged via the communication passage and the hollow portion. Since the residual oil is discharged via the communication passage and the hollow portion of the drain member in the manner mentioned above, it is possible to prevent the oil being discharged from splashing on the hands of the worker.

In this case, when the seal of the upper seal member is cancelled by loosening the drain member, the seal of the lower seal member is maintained, so that the residual oil does not leak out from the other portions than the hollow portion of the drain member at a time of discharging the residual oil.
Patent Document 1
Japanese Unexamined Patent Publication No. 2000-42309
Patent Document 2
Japanese Unexamined Patent Publication No. 11-104408

However, in the drain mechanism of the conventional fluid filter, since the drain member is formed in the tubular shape and is structured such as to have the drain passage (the hollow portion and the communication passage mentioned above), dusts or the like such as sediments or mud or the like is mixed into the inner portion of the cap through the drain passage of the drain member from the external portion, during a normal use of the fluid filter, so that it is hard to secure a reliability of seal in the drain hole achieved by the seal member. Further, since it is necessary to arrange a pair of upper and lower seal members in the drain member so as to structure the seal structure, the entire structure is expensive.

Further, since the conventional drain mechanism of the fluid filter mentioned above is structured such that the drain member is provided with the male screw in the leasing end side (the upper end side) thereof, and is provided with the seal member in the lower side of the male screw, it is necessary to arrange a pair of upper and lower seal members so as to form the seal structure, and the entire structure becomes expensive and complex. Further, since the drain member and the seal surface to which a pair of upper and lower seal members are attached are comparatively long in the axial direction, there is a problem that the entire structure can not be made compact in the axial direction.

Further, in the case of replacing the seal member attached to the drain member, it is necessary to insert the male screw in the leading end side of the drain member to a new seal member, so that there is a risk that the seal member may be damaged by the male screw at a time of inserting the male screw.

### SUMMARY OF THE INVENTION

As mentioned above, the present invention is made by taking the actual condition mentioned above into consideration, and an object of the present invention is to provide a fluid filter and a drain mechanism of the fluid filter having a simple and inexpensive structure which can prevent a heated fluid from splashing on a worker at a time of discharging the fluid such as a time of replacing an element, and can maintain a high reliability in sealing a drain hole for a long time period while preventing dusts or the like from being mixed from an external portion at a time of normal use.

Further, another object of the present invention is to provide a preferable draining method of the fluid filter.

Further, the present invention is made by taking the actual condition mentioned above into consideration, and the other object of the present invention is to provide a fluid filter and a drain mechanism of the fluid filter having an inexpensive, simple and axially compact structure which can prevent the heated fluid from splashing on the worker at a time of discharging the fluid such as a time of replacing an element.

The present invention is shown below.
[1] A drain mechanism of a fluid filter comprising:
   a cap provided with a drain portion having a drain hole; and
   a drain member engaged with said cap in such a manner as to close said drain hole from an outer side thereof,
   wherein in a state of canceling a screw fastening between a male screw provided in one of said drain member and said cap, and a female screw provided in another, a seal member provided in one of an outer peripheral side of said drain member and an inner peripheral side of said drain portion keeps a state in which the seal member is pressure contacted with a seal surface provided in another.
[2] The drain mechanism of a fluid filter as mentioned in above [1], wherein said male screw is provided in the outer peripheral side of said drain member, and said female screw is provided in the inner peripheral side of said drain portion.
[3] The drain mechanism of a fluid filter as mentioned in above [1] or [2], wherein said drain member has a small-diameter outer peripheral portion which is provided with said male screw and is arranged in a leading end side, and a large-diameter outer peripheral portion which is connected to said small-diameter outer peripheral portion in an axial direction and is provided with said seal member, and said drain portion has a small-diameter inner peripheral portion which is provided with said female screw and is arranged close to an inner side of said cap, and a large-diameter inner peripheral portion which is connected to said small-diameter inner peripheral portion in an axial direction and is provided with said seal surface.
[4] The drain mechanism of a fluid filter as mentioned in any one of above [1] to [3], wherein said drain member has a flange portion for forming a gap between the drain member and the outer peripheral portion of said cap.
[5] A fluid filter comprising:
   the drain mechanism as mentioned in any one of above [1] to [4]; and
   a case engaged with said cap constituting said drain mechanism.
[6] The draining method of the fluid filter as mentioned in above [5], wherein the screw fastening between said male screw and said female screw is cancelled, the pressure contact state of said seal member with said seal surface is kept, said drain member is detached from said cap in this state, and the fluid in the inner portion of the housing constituted by said cap and said case is discharged from said drain hole to the outer portion.
[7] The draining method of the fluid filter as mentioned in above [6], wherein said drain member is detached from said cap by utilizing a gap formed between the outer surface of said cap and said drain member.
[8] A drain mechanism of a fluid filter comprising:
   a cap provided with a drain portion having a drain hole; and
   a drain member engaged with said cap in such a manner as to close said drain hole from an outer side thereof,
   wherein said drain member has a small-diameter outer peripheral portion which is provided with a seal member and is arranged in a leading end side, a large-diameter outer peripheral portion which is connected to said small-diameter outer peripheral portion in an axial direction and is provided with a male screw, a hollow portion which is arranged along an axial direction, and a communication passage which is connected to said hollow portion and is open to an outer peripheral side between said seal member and said male screw, and said drain portion has a small-diameter inner peripheral portion which is provided with a seal surface pressure contacted with said seal member and is arranged close to an inner side of said cap, and a large-diameter inner peripheral portion which is connected to said small-diameter inner peripheral portion in an axial direction and is provided with a female screw engaged with said male screw, and
   wherein when loosening said drain member in a direction of canceling the screw fastening between said male screw of said drain member and said female screw of said drain portion, the pressure contact state between said seal member of said drain member and said seal surface of said drain portion is cancelled.
[9] The drain mechanism of a fluid filter as mentioned in above [8], wherein said drain member has a connection portion capable of connecting a fluid discharging hose.
[10] A fluid filter comprising:
   the drain mechanism as mentioned in above [8] or [9]; and
   a case engaged with said cap constituting said drain mechanism.

In accordance with the drain mechanism of the fluid filter (the items [1] to [4] mentioned above) on the basis of the present invention, even when the screw fastening between the male screw and the female screw is cancelled, the pressure contact state of the seal member to the seal surface is maintained. On the basis of the pressure contact of the seal member, the state in which the drain member is engaged with the cap is kept, and the fluid in the inner portion of the housing is not leaked to the outer portion. Further, the fluid in the inner portion of the housing can be discharged to the outer portion from the drain hole by breaking away the drain member from the cap by using an appropriate tool or the like. Accordingly, it is possible to inhibit the heated fluid from splashing on the worker at a time of discharging the fluid such as a time of replacing the element.

Further, since the drain hole is closed by the solid drain member at a time of normal use, it is possible to prevent the dusts or the like from entering into the inner portion of the cap, and it is possible to maintain a high sealing reliability of the drain hole for a long time period.

Further, the structure can be made by arranging a minimum number of (basically one) seal member, and a simple and inexpensive structure as a whole can be achieved.

Further, in the case that the male screw is provided in the outer peripheral side of the drain member and the female screw is provided in the inner peripheral side of the drain portion, a more simple and inexpensive structure can be achieved.

Further, in the case that the drain member has a small-diameter outer peripheral portion in a leading end side which is provided with the male screw, and a large-diameter outer peripheral portion which is connected to the small-diameter outer peripheral portion in an axial direction and is provided with the seal member, and the drain portion has a small-diameter inner peripheral portion which is provided with the female screw and is arranged close to an inner side of the cap, and a large-diameter inner peripheral portion which is connected to the small-diameter inner peripheral portion in an axial direction and is provided with the seal surface, it is possible to provide a drain mechanism having a more simple and inexpensive structure.

Further, in the case that the drain member has a flange portion which can form a gap with respect to an outer surface of the cap, it is possible to detach the drain member from the cap more easily by inserting an appropriate tool or the like to the gap.

In accordance with the fluid filter (the item [5] mentioned above) on the basis of the present invention, it is possible to inhibit the heated fluid from splashing on the worker at a time of discharging the fluid such as a time of replacing the element, in the same manner as that of the drain mechanism mentioned above. Further, at a time of normal use, it is possible to prevent the dusts or the like from entering into the inner portion of the cap, and it is possible to maintain a high sealing reliability of the drain hole for a long time period. Further, the seal structure can be made by arranging a minimum number of (basically one) seal member, and a simple and inexpensive structure as a whole can be achieved.

In accordance with the draining method of the fluid filter (the items [6] and [7] mentioned above) on the basis of the present invention, it is possible to discharge the fluid in the inner portion of the housing to the outer portion from the drain hole by canceling the screw fastening between the male screw and the female screw, keeping the pressure contact state of the seal member with the seal surface, and detaching the drain member from the cap from this state. Accordingly, it is possible to inhibit the heated fluid from splashing on the worker at a time of discharging the fluid such as a time of replacing the element.

Further, in the case of detaching the drain member from the cap by utilizing the gap formed between the outer surface of the cap and the drain member, it is possible to break away the drain member from the cap more easily by inserting an appropriate tool or the like to the gap.

In accordance with the drain mechanism of the fluid filter (the items [8] and [9] mentioned above) on the basis of another aspect of the present invention, when loosening the drain member in a direction of canceling the screw fastening between the male screw of the drain member and the female screw of the drain portion, the pressure contact state between the seal member of the drain member and the seal surface of the drain portion is cancelled while keeping the screw fastening state between the male screw and the female screw, and the communication passage of the drain member is communicated with the inner portion of the housing. Accordingly, it is possible to discharge the fluid in the inner portion of the housing to the outer portion via the communication passage and the hollow portion of the drain member without a fluid splash on the worker.

Further, since the drain member is provided with the seal member in the leading end side and the male screw is provided in a rear side of the seal member, the seal structure can be made by arranging a minimum number of (basically one) seal member, and an inexpensive, simple and axially compact structure as a whole can be achieved.

Further, it is possible to easily and rapidly exchange the seal member existing in the leading end side of the drain member without damaging the seal member by the male screw of the drain member.

Further, in the case that the drain member has a connection portion capable of connecting a hose for discharging the fluid, it is possible to inhibit a workability deterioration caused by the fluid splash at a time of discharging the fluid.

In accordance with the fluid filter (the item [10] mentioned above) on the basis of the other aspect of the present invention, it is possible to discharge the fluid in the inner portion of the housing to the outer portion via the communication passage and the hollow portion of the drain member without a fluid splash on the worker, in the same manner as that of the drain mechanism mentioned above. Further, the seal structure can be made by arranging a minimum number of (basically one) seal member, so that it is possible to achieve an inexpensive and simple structure as a whole, and it is possible to achieve a compact structure in an axial direction. Further, it is possible to easily and rapidly exchange the seal member without giving a damage.

### MODE FOR CARRYING OUT THE INVENTION

A detail of the present invention will be given below.

### (Embodiment 1)

### <Fluid Filter>

The "fluid filter" in accordance with the present mode 1 is provided with a drain mechanism and a housing mentioned below. The fluid filter can be provided, for example, with a filter element received in the housing.

The "housing" mentioned above is not particularly limited in a structure, a shape, a material and the like thereof as far as it is constituted by a cap and a case which can be engaged and disengaged with each other. As an engaging and disengaging mechanism between the cap and the case, for example, there can be listed up (1) a screwing mechanism constituted by male and female screw portions which can be screwed with each other, (2) a bayonet mechanism constituted by a groove portion and a convex portion which can be engaged and disengaged with each other, and the like. In this case, an inflow port for taking in a liquid from an external portion and an outflow port for delivering the liquid to the external portion are normally formed in the case.

### <Drain Mechanism>

The "drain mechanism" in accordance with the present mode is provided with a cap and a drain member mentioned below.

The "cap" mentioned above is not particularly limited in a structure, a shape, a material and the like thereof as far as it is provided with a drain portion having a drain hole. The drain hole mentioned above is not particularly limited in a structure, a shape, a size and the like thereof as far as it is provided for discharging the fluid in the inner portion of the housing to the outer portion.

The "drain portion" mentioned above may, for example, have a small-diameter inner peripheral portion provided close to an inner side of the cap, and a large-diameter inner peripheral portion connected to the small-diameter inner peripheral portion in an axial direction. In this case, for example, a female screw screwing with a male screw of the drain member mentioned below is provided in the inner peripheral side of the small-diameter inner peripheral portion, and a seal surface (or a seal member) pressure contacted with a seal member (or a seal surface) of the drain member mentioned below is provided in the inner peripheral side of the large-diameter inner peripheral portion. Further, for example, the seal surface (or the seal member) can be provided in the inner peripheral side of the small-diameter inner peripheral portion, and the female screw can be provided in the inner peripheral side of the large-diameter inner peripheral portion.

In this case, the seal member mentioned above is structured such as to seal (hold in a liquid tight manner) by a predetermined compression load on the basis of the pressure contact with the seal surface. As the seal member, there can be, for example, listed up an O-ring, a V-ring, an X-ring and the like.

The "drain member" mentioned above is not particularly limited in a structure, a shape, a material and the like thereof as far as it can be engaged with the cap from an outer side thereof so as to close the drain hole. The drain member can, for example, have a small-diameter outer peripheral portion in a leading end side, and a large-diameter outer peripheral portion connected to the small-diameter outer peripheral portion in an axial direction. In this case, for example, a male screw screwing with a female screw of the drain portion mentioned above can be provided in the outer peripheral side of the small-diameter outer peripheral portion, and a seal member (or a seal surface) pressure contacted with a seal surface (or a seal member) of the drain portion mentioned above can be provided in the outer peripheral side of the large-diameter outer peripheral portion. Further, for example, the seal member (or the seal surface) can be provided in the outer peripheral side of the small-diameter outer peripheral portion, and the female screw can be provided in the outer peripheral side of the large-diameter outer peripheral portion.

Further, the drain member can, for example, have a flange portion for forming a gap with respect to an outer surface of the cap. The gap generally corresponds to a tool inserting gap for appropriately inserting a tool (for example, a driver tool or the like). The flange portion can be, for example, provided in a lower end side of the large-diameter outer peripheral portion of the drain member. Further, the drain member can, for example, have an operation portion (for example, a hexagonal or octagonal portion or the like) which is appropriately operated by a tool or the like at a time of engaging the drain member with the cap or canceling the engagement. This operation portion can be, for example, provided in a lower end side of the flange portion mentioned above.

The screwing depth of the "male screw" and the "female screw" mentioned above can be, for example, set to a smaller value than an axial length of the seal surface mentioned above. Accordingly, it is possible to keep the pressure contact state between the seal member and the seal surface in a state of canceling the screw fastening between the male screw and the female screw.

### <Draining Method>

In accordance with a draining method in accordance with the present mode, first the screw fastening between the male screw and the female screw is cancelled, and the pressure contact state of the seal member with the seal surface is kept. At this time, the state in which the drain member is engaged with the cap is kept on the basis of the pressure contact of the seal member, and the fluid in the inner portion of the housing is not leaked from the drain hole to the outer portion. When the drain member is datached from the cap in this state, the fluid in the inner portion of the housing is discharged to the outer portion from the drain hole in the open state.

In accordance with this drain method, it is possible to detach the drain member from the cap, for example, by utilizing the gap formed between the cap and the drain member. The appropriate tool (for example, the driver tool or the like) is generally inserted to the gap, and it is possible to detach the drain member from the cap on the basis of the principle of leverage.

### (Embodiment 2)

### <Fluid Filter>

The "fluid filter" in accordance with the present mode 2 is provided with a drain mechanism and a housing mentioned below. The fluid filter can be provided, for example, with a filter element received in the housing.

The "housing" mentioned above is not particularly limited in a structure, a shape, a material and the like thereof as far as it is constituted by a cap and a case which can be engaged and disengaged with each other. As an engaging and disengaging mechanism between the cap and the case, for example, there can be listed up (1) a screwing mechanism constituted by male and female screw portions which can be screwed with each other, (2) a bayonet mechanism constituted by a groove portion and a convex portion which can be engaged and disengaged with each other, and the like. In this case, an inflow port for taking in a liquid from an external portion and an outflow port for delivering the liquid to the external portion are normally formed in the case.

### <Drain Mechanism>

The "drain mechanism" in accordance with the present mode is provided with a cap and a drain member mentioned below.

The "cap" mentioned above is not particularly limited in a structure, a shape, a material and the like thereof as far as it is provided with a drain portion having a drain hole. The drain hole mentioned above is not particularly limited in a structure, a shape, a size and the like thereof as far as it is provided for discharging the fluid in the inner portion of the housing to the outer portion.

The "drain portion" mentioned above has a small-diameter inner peripheral portion provided close to an inner side of the cap having a seal surface, and a large-diameter inner peripheral portion connected to the small-diameter inner peripheral portion in an axial direction and provided with a female screw. Further, a screw depth of the female screw of the drain portion can be set to a larger value than an axial length of the seal surface mentioned above. Accordingly, it is possible to keep the screw fastening state between the male screw and the female screw mentioned above, in a state in which the pressure contact between the seal member and the seal surface mentioned below is cancelled.

The "drain member" mentioned above is not particularly limited in a structure, a shape, a material and the like thereof as far as it can be engaged with the cap from an outer side thereof so as to close the drain hole. The drain member has a small-diameter outer peripheral portion in a leading end side provided with a seal member, and a large-diameter outer peripheral portion connected to the small-diameter outer peripheral portion in an axial direction and provided with a male screw. Further, the drain member has a hollow portion extending along an axial direction, and a communication passage connected to the hollow portion and open to an outer peripheral side between the seal member and the male screw. The hollow portion can be, for example, open to a base end side of the drain member. Further, the communication passage mentioned above can be, for example, provided along a direction orthogonal to the axial direction of the drain member.

In this case, the seal member mentioned above is structured such as to seal (hold in a liquid tight manner) by a predetermined compression load on the basis of the pressure contact with the seal surface mentioned above. As the seal member, there can be, for example, listed up an O-ring, a V-ring, an X-ring and the like.

Further, the drain member can, for example, have a connection portion which can connect a fluid discharging hose. This connection portion is generally formed in a shape expanding in an outer peripheral side. Further, the drain member can, for example, have a flange portion brought into contact with an outer surface of the cap. Further, the drain member can, for example, has an operation portion (for example, a hexagonal or octagonal portion or the like) which is appropriately operated by a tool or the like at a time of engaging and disengaging the drain member with the cap or canceling the engagement. Further, the drain member can, for example, have a support outer peripheral portion (for example, an outer peripheral step portion or the like) supporting ah elastic means (for example, a spring or the like) for supporting a filter element.

### BRIEF DESCRIPTION OF THE DRAWINGS

Fig. 1 is a cross sectional view showing an entire structure of an oil filter in accordance with the present embodiment 1 in a used state;
Fig. 2 is an enlarged view of a main portion in Fig. 1;
Fig. 3 is an enlarged view of a main portion of the oil filter in an oil discharging state;
Fig. 4 is a cross sectional view showing an entire structure of an oil filter in accordance with the present embodiment 2 in a used state;
Fig. 5 is an enlarged view of a main portion in Fig. 4; and
Fig. 6 is an enlarged view of a main portion of the oil filter in an oil discharging state.

### DESCRIPTION OF THE PREFERRED EMBODIMENT

### (Embodiment 1)

A particular description of the present invention will be given below on the basis of an embodiment 1 with reference to the accompanying drawings. In the present embodiment 1, an oil filter attached to a cylinder block (not shown) of an internal combustion engine is exemplified as an element replacement type filter.

### (1) Structure of oil filter

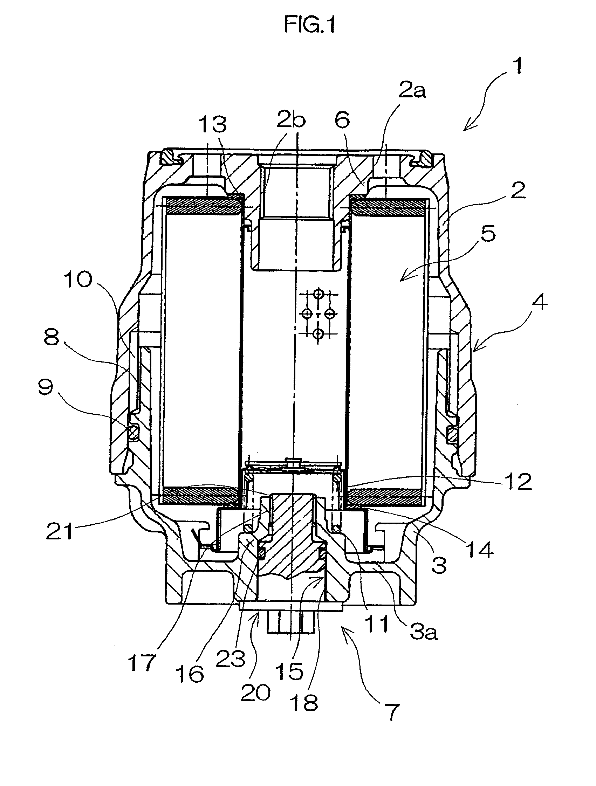

An oil filter 1 in accordance with the present embodiment 1 is basically provided, as shown in Fig. 1, with a housing 4 constituted by a metal case 2 and a cap 3 which can be engaged with and disengaged from each other, a filter element 5 received within the housing 4 and a drain mechanism 7. In the case 2 mentioned above, there are formed an inflow passage 2a for flowing the oil from the internal combustion engine, and an outflow passage 2b for flowing the filtrated oil to the internal combustion engine.

A male screw portion 8 is formed on an outer peripheral side of the cap 3, and an O-ring 9 is attached to the outer peripheral surface of the cap 3. A female screw portion 10 is formed on an inner peripheral surface of the case 2. When screwing the male screw portion 8 with the female screw portion 10 so as to engage the case 2 with the cap 3 via the O-ring 9, an inner portion of the housing 4 is sealed (held in a liquid tight manner). In the inner portion of the housing 4, at the plate 12 and the case projection portion 6 provided in the case 2, upper and lower end portions of the filter element 5 are sealed via the respective seal members 13 and 14 due to the energizing force of the spring 11, and a filtration of the oil is carried out by the filter element 5.

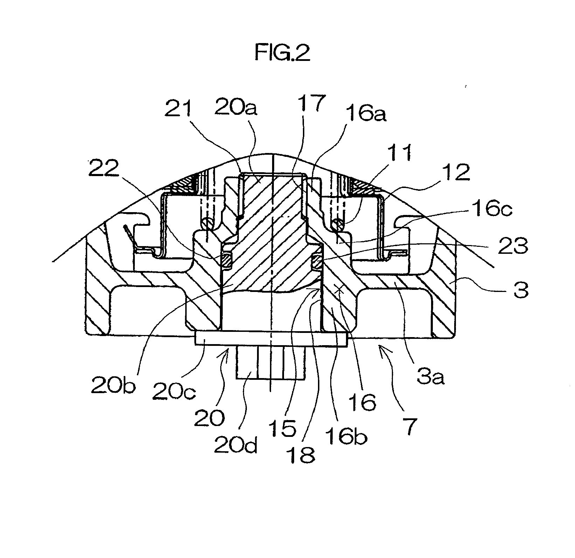

Next, a description will be given of a drain mechanism 7 in accordance with the present embodiment 1. As shown in Fig. 2, a cap tubular portion 16 (exemplified as a drain portion) forming a drain hole 15 is provided in a center of the bottom portion 3a in the cap 3. The cap tubular portion 16 has a small-diameter inner peripheral portion 16a provided close to an inner side of the cap 3, and a large-diameter inner peripheral portion 16b connected to a lower side of the small-diameter inner peripheral portion 16a. A female screw 17 having a predetermined screw depth is formed in an inner peripheral side of the small-diameter inner peripheral portion 16a. Further, a seal surface 18 set to a predetermined axial length is provided in an inner peripheral side of the large-diameter inner peripheral portion 16b.

In this case, the spring 11 is interposed between an outer peripheral step portion 16c of the cap tubular portion 16 and the lower surface of the plate 12.

The drain mechanism 7 is provided with a metal drain bolt 20 (exemplified as a drain member) which is engaged with the cap 3 so as to close the drain hole 15 from an outer side thereof. The drain bolt 20 has a small-diameter outer peripheral portion 20a provided in a leading end side thereof, and a large-diameter outer peripheral portion 20b connected to a lower side of the small-diameter outer peripheral portion 20a. Further, a flange portion 20c is continuously provided in a lower side of the large-diameter outer peripheral portion 20b, and a hexagonal portion 20d (exemplified as an operation portion) is continuously provided in a lower side of the flange portion 20c.

Further, a male screw 21 having a predetermined screw depth and screwing with the male screw 17 of the cap tubular portion 16 mentioned above is formed in an outer peripheral side of the small-diameter outer peripheral portion 20a of the drain bolt 20. Further, an annular groove 22 is formed at a predetermined height position in an outer peripheral side of the large-diameter outer peripheral portion 20b, and an O-ring 23 (exemplified as a seal member) pressure contacted with the seal surface 18 of the cap tubular portion 16 mentioned above is attached to an inner side of the annular groove 22.

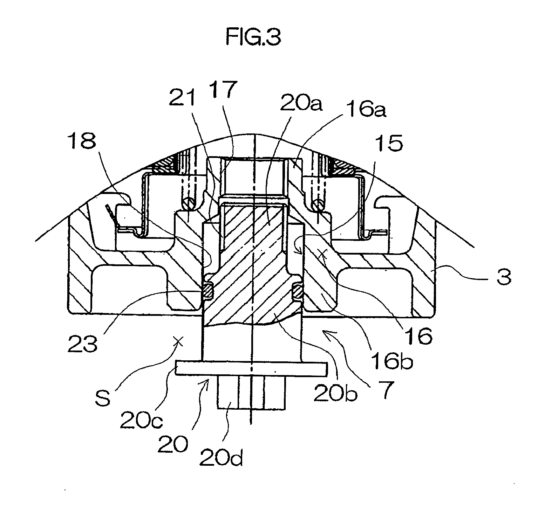

In this case, the screw depth of the female screw 17 mentioned above is set to a smaller value than an axial length of the seal surface 18. Accordingly, in the drain mechanism 7, even in a state in which the screw fastening between the male screw 21 of the drain bolt 20 and the female screw 17 of the cap tubular portion 16 is cancelled, as shown in Fig. 3, the structure is made such that the state in which the O-ring 23 of the drain bolt 20 is pressure contacted with the seal surface 18 of the cap tubular portion 16 is kept. As a result, the state in which the drain bolt 20 is engaged with the cap 3 is kept on the basis of a compression load of the O-ring 23, and the oil in the inner portion of the housing 4 does not leak to the outer portion from the drain hole 15.

In this case, as mentioned above, the structure is made such that a tool inserting gap S for inserting a driver tool or the like is formed between an upper end surface of the flange portion 20c of the drain bolt 20 and a lower end surface of the cap 3, in a state in which the screw fastening between the male screw 21 and the female screw 17 is cancelled and the O-ring 23 is pressure contacted with the seal surface 18.

### (2) Operation of oil filter

Next, a description will be given of an operation of the oil filter 1. At a time of normal use of the oil filter 1, the drain bolt 20 is screwed into the drain hole 15 of the cap 3 via the O-ring 23, and the drain hole 15 is sealed (refer to Fig. 2). Further, the oil flowing from the side of the internal combustion engine via the inflow passage 2a of the case 2 is filtrated by the filter element 5, and thereafter the filtrated oil is returned to the side of the internal combustion engine via the outflow passage 2b.

Further, at a time of exchanging the filter element 5, the O-rings 9 and 23, and the like, the worker first engages the appropriate tool with the hexagonal portion 20d so as to loosen the drain bolt 20, and cancels the screw fastening between the male screw 21 of the drain bolt 20 and the female screw 17 of the cap tubular portion 16. When the screw fastening between the male screw 21 and the female screw 17 is completely cancelled, the O-ring 23 of the drain bolt 20 maintains the state in which the O-ring 23 is pressure contacted with the seal surface 18 of the cap tubular portion 16 (refer to Fig. 3). Accordingly, the state in which the drain bolt 20 is engaged with the cap 3 is kept on the basis of the compression load of the O-ring 23, and the residual oil in the inner portion of the housing 4 does not leak to the outer portion.

The drain bolt 20 is detached from the cap 3 by inserting the driver tool or the like to the tool inserting gap S, bringing the driver tool or the like into contact with the flange portion 20c of the drain bolt 20 and the lower end surface of the cap 3 and utilizing the principle of leverage. Then, the residual oil in the inner portion of the housing 4 is discharged from the drain hole 15 which is set in the open state. In this case, the drain bolt 20 broken away from the cap 3 is received by a net body or the like constituting an oil receiving plate arranged in a lower portion.

Thereafter, when the residual oil in the inner portion of the housing 4 is all discharged, the worker loosens the cap 3 with respect to the case 2 by using an attaching and detaching jig (not shown), and separates the cap 3 from the case 2, whereby the replacement work of the filter element 5 and the O-rings 9 and 23 is performed.

### (3) Effect of embodiment 1

As mentioned above, in accordance with the present embodiment 1, since the structure is made such that the drain hole 15 is closed by the solid drain bolt 20 at a time of normal use of the oil filter 1, the dusts such as the sediment, the mud and the like are not mixed into the inner portion of the housing 4 via the drain hole 15 from the external portion, and it is possible to maintain a high sealing reliability of the O-ring 23 for a long time period.

Further, at a time of exchanging the element or the like, since the structure is made such that the seal by the O-ring 23 is kept even in the state in which the screw fastening between the male screw 21 and the female screw 17 is cancelled, the state in which the drain bolt 20 is engaged with the cap 3 is kept on the basis of the compression load of the O-ring 23, and the residual oil in the inner portion of the housing 4 does not leak to the outer portion from the drain hole 15. Further, it is possible to discharge the heated residual oil in the inner portion of the housing 4 to the outer portion from the drain hole 15 without being splashed on the worker, by detaching the drain bolt 20 from the cap 3 while using the driver tool or the like.

Further, in accordance with the present embodiment 1, since the tool inserting gap S is formed between the flange portion 20c of the drain bolt 20 and the lower end surface of the cap 3, it is possible to extremely easily and rapidly break away the drain bolt 20 from the cap 3 by inserting the driver tool or the like to the tool inserting gap S and utilizing the principle of leverage.

Further, in accordance with the present embodiment 1, the seal structure can be made by arranging one O-ring 23, and the simple and inexpensive structure can be achieved as a whole, in comparison with the conventional structure in which the seal structure is formed by arranging a pair of upper and lower O-rings.

In this case, the present invention is not limited to the embodiment 1 mentioned above, and can be variously modified within the scope of the present invention in correspondence to the object and the intended use. In other words, in the embodiment 1 mentioned above, the structure is made such that the O-ring 23 is attached to the large-diameter outer peripheral portion 20b of the drain bolt 20, and the seal surface 18 is provided in the large-diameter inner peripheral portion 16b of the cap tubular portion 16, however, the structure is not limited to this, and the structure may be made, for example, such that the seal surface is provided in the large-diameter outer peripheral portion 20b of the drain bolt 20, and the O-ring is attached to the large-diameter inner peripheral portion 16b of the cap tubular portion 16. Even in accordance with this structure, it is possible to obtain the same performance and effects as mentioned above.

Further, in the embodiment 1 mentioned above, the structure is made such that the male screw 21 is provided in the small-diameter outer peripheral portion 20a of the drain bolt 20, the female screw 17 is provided in the small-diameter outer peripheral portion 16a of the cap tubular portion 16, and the O-ring 23 is interposed between the large-diameter outer peripheral portion 20b of the drain bolt 20 and the large-diameter inner peripheral portion 16b of the cap tubular portion 16, however, the structure is not limited to this, and the structure may be made, for example, such that the O-ring is interposed between the small-diameter outer peripheral portion 20a of the drain bolt 20 and the small-diameter outer peripheral portion 16a of the cap tubular portion 16, the male screw 21 is provided in the large-diameter outer peripheral portion 20b of the drain bolt 20, the female screw 17 is provided in the large-diameter inner peripheral portion 16b of the cap tubular portion 16. Even in accordance with this structure, it is possible to obtain the same performance and effects as mentioned above.

Further, the structure may be made such that the drain bolt 20 is provided with a tubular portion in which a female screw is formed in an inner peripheral side, the cap 3 is provided with a tubular portion in which a male screw is formed in an outer peripheral side, and the drain bolt 20 is engaged with and disengaged from the cap 3 by screw fastening the male screw and the female screw and canceling the engagement.

### (Embodiment 2)

A particular description of another aspect of the present invention will be given below on the basis of an embodiment 2 with reference to the accompanying drawings. In the present embodiment 2, an oil filter attached to a cylinder block (not shown) of an internal combustion engine is exemplified as an element replacement type filter.

### (1) Structure of oil filter

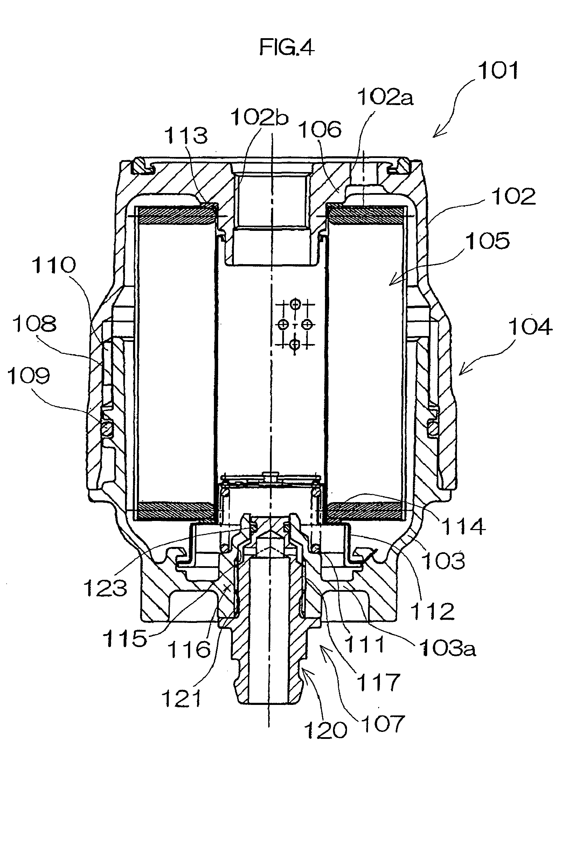

An oil filter 101 in accordance with the present embodiment 2 is basically provided, as shown in Fig. 4, with a housing 104 constituted by a metal case 102 and a cap 103 which can be engaged with and disengaged from each other, a filter element 105 received within the housing 104 and a drain mechanism 107. In the case 102 mentioned above, there are formed an inflow passage 102a for flowing the oil from the internal combustion engine, and an outflow passage 102b for flowing the filtrated oil to the internal combustion engine.

A male screw portion 108 is formed on an outer peripheral side of the cap 103, and an O-ring 109 is attached to the outer peripheral surface of the cap 103. A female screw portion 110 is formed on an inner peripheral surface of the case 102. When screwing the male screw portion 108 with the female screw portion 110 so as to engage the case 102 with the cap 103 via the O-ring 109, an inner portion of the housing 104 is sealed (held in a liquid tight manner). In the inner portion of the housing 104, at the plate 112 and the case projection portion 106 provided in the case 102, upper and lower end portions of the filter element 105 are sealed via the respective seal members 113 and 114 due to the energizing force of the spring 111, and a filtration of the oil is carried out by the filter element 105.

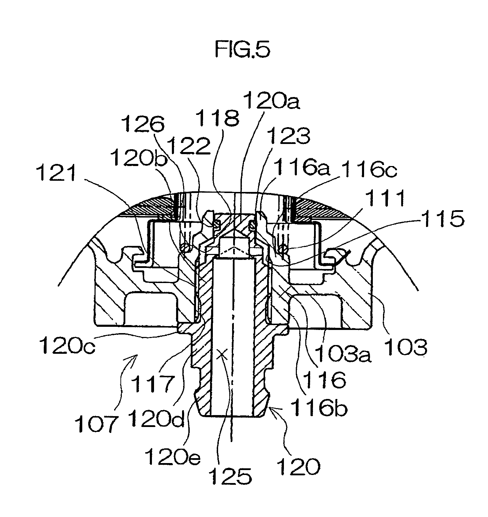

Next, a description will be given of a drain mechanism 107 in accordance with the present embodiment 2. As shown in Fig. 5, a cap tubular portion 116 (exemplified as a drain portion) forming a drain hole 115 is provided in a center of the bottom portion 103a in the cap 103. The cap tubular portion 116 has a small-diameter inner peripheral portion 116a provided close to an inner side of the cap 103, and a large-diameter inner peripheral portion 116b connected to a lower side of the small-diameter inner peripheral portion 116a. A seal surface 118 set to a predetermined axial length is provided in an inner peripheral side of the small-diameter inner peripheral portion 116a. Further, a female screw 117 having a predetermined screw depth is formed in an inner peripheral side of the large-diameter inner peripheral portion 116b.

In this case, the spring 111 is interposed between an outer peripheral step portion 116c of the cap tubular portion 116 and the lower surface of the plate 112.

The drain mechanism 107 is provided with a metal tubular drain bolt 120 (exemplified as a drain member) which is engaged with the cap 103 so as to close the drain hole 115 from an outer side thereof. The drain bolt 120 has a hollow portion 125 extending along an axis thereof and open to a lower end side thereof. Further, the drain bolt 120 has a small-diameter outer peripheral portion 120a provided in a leading end side thereof, and a large-diameter outer peripheral portion 120b connected to a lower side of the small-diameter outer peripheral portion 120a. Further, a flange portion 120c brought into contact with a lower end surface of the cap is provided in a lower side of the large-diameter outer peripheral portion 120b. A hexagonal portion 120d with which an appropriate tool can be engaged is provided in a lower side of the flange portion 120c. Further, a connection portion 120e to which one end of a fluid discharging hose (not shown) can be connected is provided in a lower side of the hexagonal portion 120d. The connection portion 120e is formed in an expanding shape toward an outer peripheral side.

Further, an annular groove 122 is formed at a predetermined height in an outer peripheral side of the small-diameter outer peripheral portion 120a, and an O-ring 123 (exemplified as a seal member) pressure contacted with the seal surface 118 of the cap tubular portion 116 is attached to an inside of the annular groove 122. Further, a male screw 121 having a predetermined screw depth and screwed with a female screw 117 of the cap tubular portion 116 is formed in an outer peripheral side of the large-diameter outer peripheral portion 120b. Further, a communication passage 126 connected to the hollow portion 125 and open to an outer peripheral side is formed in a communication portion between the small-diameter outer peripheral portion 120a and the large-diameter outer peripheral portion 120b.

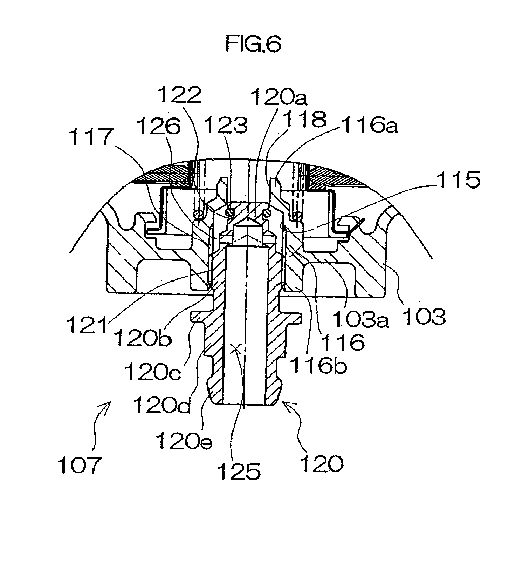

In this case, in the cap tubular portion 116 mentioned above, a screw depth of the female screw 117 is set to a greater value than an axial length of the seal surface 118. Accordingly, as shown in Fig. 6, in a state in which the pressure contact between the O-ring 123 of the drain bolt 120 and the seal surface 118 of the cap tubular portion 116 is cancelled, and the communication passage 126 of the drain bolt 120 is communicated with the inner portion of the housing 104, the screw fastening state between the male screw 121 of the drain bolt 120 and the female screw 117 of the cap tubular portion 116 is kept.

### (2) Operation of oil filter

Next, a description will be given of an operation of the oil filter 101. At a time of normal use of the oil filter 101, the drain bolt 120 is screwed into the drain hole 115 of the cap 103 via the O-ring 123, and the inner portion of the housing 104 is sealed (refer to Fig. 5). Further, the oil flowing from the side of the internal combustion engine via the inflow passage 102a of the case 102 is filtrated by the filter element 105, and thereafter the filtrated oil is returned to the side of the internal combustion engine via the outflow passage 102b.

Further, at a time of exchanging the filter element 105, the O-rings 109 and 123, and the like, the worker first engages the appropriate tool with the hexagonal portion 120d so as to loosen the drain bolt 120, and cancels the pressure contact between the O-ring 123 of the drain bolt 120 and the seal surface 118 of the cap tubular portion 116. Accordingly, the communication passage 126 of the drain bolt 120 is communicated with the inner portion of the housing 104, and the residual oil in the inner portion of the housing 104 is discharged to the outer portion via the communication passage 126 and the hollow portion 125 of the drain bolt 120 (refer to Fig. 6).

During the oil discharging, the screw fastening state between the male screw 121 of the drain bolt 120 and the female screw 117 of the cap tubular portion 116 is kept, and the state in which the drain bolt 120 is engaged with the cap 103 is kept. Further, the oil hardly leaks from the screw fastening portion between the male screw 121 and the female screw 117.

Thereafter, when the residual oil in the inner portion of the housing 104 is all discharged, the worker loosens the cap 103 with respect to the case 102 by using an attaching and detaching jig (not shown), and separates the cap 103 from the case 102, whereby the replacement work of the filter element 105 and the O-rings 109 and 123 is performed.

### (3) Effect of embodiment 2

As mentioned above, in accordance with the present embodiment 2, since the structure is made such that the pressure contact of the O-ring 123 with the seal surface 118 is cancelled in a state of keeping the screw fastening between the male screw 121 and the female screw 117, by loosening the drain bolt 120, thereby communicating the communication passage 126 of the drain bolt 120 with the inner portion of the housing 104, it is possible to discharge the residual oil in the inner portion of the housing 104 to the outer portion via the communication passage 126 and the hollow portion 125 of the drain bolt 120 without a fluid splash on the worker.

Further, since in the outer peripheral side of the drain bolt 120, the O-ring 123 is provided in the leading end side, and the male screw 121 is provided in the lower side of the O-ring 123, the fluid from the screw fastening portion between the male screw 121 and the female screw 117 hardly leaks even if the sealing by the O-ring 123 is cancelled, and the seal structure can be made by providing only one O-ring 123. Accordingly, in comparison with the conventional seal structure in which two seal member are required, it is possible to achieve the structure which is inexpensive and simple as a whole and is compact in the axial direction.

Further, it is possible to easily and rapidly exchange the O-ring 123 of the drain bolt 120 without damaging by the male screw 121.

Further, in accordance with the present embodiment 2, since the communication passage 126 of the drain bolt 120 is arranged in the lower side of the O-ring 123, the dusts such as the sediment, the mud and the like making an intrusion into the oil filter from the outer portion through the hollow portion 125 of the drain bolt 120 at a time of normal use of the oil filter 101 drop to the lower side from the opening of the communication passage 126, and are inhibited from being mixed into the portion between the O-ring 123 and the seal surface 118 existing in the upper side of the opening of the communication passage 126. On the contrary, in the conventional drain mechanism mentioned above, since the communication passage is arranged in the upper side of the O-ring in the drain member, most of the intruding dusts and the like fall downward from the opening of the communication passage, and tend to be mixed into the portion between the seal member and the seal surface, so that it is hard to secure a reliability of the seal in the drain hole by the seal member.

In this case, in the present embodiment 2, as mentioned above, it can be considered that the dusts and the like enter via the hollow portion 125 and the communication passage 126 of the drain bolt 120. It is therefore preferable to clean the drain bolt 120 and the cap tubular portion 116 after discharging the oil. It is possible to describe a cleaning instruction on a service manual or the like.

In the present invention, the structure is not limited to the embodiment 2 mentioned above, and can be made as an embodiment which is variously modified within the scope of the present invention in correspondence to the object and the intended use. In other words, in the embodiment 2 mentioned above, the structure is made such that the oil is discharged from the lower end opening of the drain bolt 120 to the oil receiving plate or the like placed in the lower side of the drain bolt, however, the structure is not limited to this, and the structure may be made, for example, such that one end of an oil discharging hose (not shown) is connected to the connection portion 120e of the drain bolt 120 and the oil is discharged via the hose. Accordingly, it is possible to obtain the same performance and effects as those of the embodiment 1 mentioned above, and it is possible to prevent the oil from splashing at a time of discharging the oil.

An object of the present invention is to provide a drain mechanism of a fluid filter having a simple and inexpensive structure which can prevent a heated fluid from splashing on a worker at a time of discharging the fluid such as a time of replacing an element.

A drain mechanism (7) of the present invention is provided with a cap (3) having a drain portion (a cap tubular portion (16)) including a drain hole (15), a drain member (a drain bolt (20)) engaged with the cap in such a manner as to close the drain hole from an outer side thereof. Further, in a state of canceling a screw fastening between a male screw (21) provided in one of the drain member and the cap, and a female screw (17) provided in another, a seal member (an O-ring (23)) provided in one of an outer peripheral side of the drain member and an inner peripheral side of the drain portion keeps a state in which the seal member is pressure contacted with a seal surface (18) provided in another.

Another drain mechanism (107) is provided with a cap (103), and a drain member (a drain bolt (120)) engaged with the cap from an outer side thereof, the drain member has a small-diameter outer peripheral portion (120a) which is provided with a seal member (an O-ring (123)), a large-diameter outer peripheral portion (120b) which is provided with a male screw (121), a hollow portion (125) which is arranged along an axial direction, and a communication passage (126) which is connected to the hollow portion and is open to an outer peripheral side, and a drain portion (a cap tubular portion (116)) has a small-diameter inner peripheral portion (116a) which is provided with a seal surface (118), and a large-diameter inner peripheral portion (116b) which is provided with a female screw (117). In this structure, when the drain member is loosened in a direction of canceling the screw fastening between the male screw and the female screw, the pressure contact state between the seal member and the seal surface is cancelled.

## Claims

1. A drain mechanism of a fluid filter comprising:
a cap provided with a drain portion having a drain hole; and
a drain member engaged with said cap in such a manner as to close said drain hole from an outer side thereof,
wherein said drain member has a small-diameter outer peripheral portion which is provided with a seal member and is arranged in a leading end side, a large-diameter outer peripheral portion which is connected to said small-diameter outer peripheral portion in an axial direction and is provided with a male screw, a hollow portion which is arranged along an axial direction, and a communication passage which is connected to said hollow portion and is open to an outer peripheral side between said seal member and said male screw, and said drain portion has a small-diameter inner peripheral portion which is provided with a seal surface pressure contacted with said seal member and is arranged close to an inner side of said cap, and a large-diameter inner peripheral portion which is connected to said small-diameter inner peripheral portion in an axial direction and is provided with a female screw engaged with said male screw, and
wherein when loosening said drain member in a direction of cancelling the screw fastening between said male screw of said drain member and said female screw of said drain portion, the pressure contact state between said seal member of said drain member and said seal surface of said drain portion is cancelled.

2. The drain mechanism of a fluid filter as claimed in claim 1, wherein said drain member has a connection portion capable of connecting a fluid discharging hose.

3. A fluid filter comprising:
the drain mechanism as claimed in claim 1 or 2; and
a case engaged with said cap constituting said drain mechanism.
